(19) Europäisches Patentamt
European Patent Office
Office européen des brevets

(11) Veröffentlichungsnummer: **0 470 573 A2**

(12) # EUROPÄISCHE PATENTANMELDUNG

(21) Anmeldenummer: **91113192.8**

(22) Anmeldetag: **06.08.91**

(51) Int. Cl.5: **C01F 7/50**, C01B 33/107, C25C 3/06

(30) Priorität: **08.08.90 DE 4025083**

(43) Veröffentlichungstag der Anmeldung: **12.02.92 Patentblatt 92/07**

(84) Benannte Vertragsstaaten: **FR GB IT NL**

(71) Anmelder: **VEREINIGTE ALUMINIUM-WERKE AKTIENGESELLSCHAFT**
**Georg-von-Boeselager-Strasse 25**
**W-5300 Bonn 1(DE)**

(72) Erfinder: **Wilkening, Siegfried Dr.**
**Waldstrasse 17**
**W-5305 Alfter-Oedekoven(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**W-5300 Bonn 1(DE)**

(54) **Verfahren zur Aufarbeitung fluorhaltiger Rückstände.**

(57) 2.1 Fluorhaltige Rückstände fallen in der Aluminium-Primärproduktion überwiegend als verbrauchtes Auskleidungsmaterial der Elektrolysezellen an. Die Lebens- oder Haltbarkeitsdauer einer Wannenauskleidung einer Elektrolysezelle beträgt gewöhnlich 4 bis 8 Jahre. Danach muß in der Regel das gesamte verbrauchte Auskleidungsmaterial aus der Elektrolysewanne herausgebrochen und entsorgt werden.

2.2 Es soll ein Verfahren entwickelt werden, das es erlaubt, bei Temperaturen deutlich unterhalb von 1000 °C mindestens 98 % des Fluorgehaltes aus fluorhaltigen Rückständen, insbesondere der Aluminium-Primärproduktion, zu entfernen. Dabei soll ein unschädlicher Endrückstand mit einem Fluorgehalt von maximal 0,5 Gew.-% erzeugt werden und gleichzeitig eine einfache Rückgewinnung von reinem $AlF_3$ möglich sein. Das Verfahren ist dadurch gekennzeichnet, daß in einer ersten Verfahrensstufe feinteilige fluor- und kohlenstoffhaltige Rückstände zusammen mit $SiO_2$ oder $SiO_2$-haltigen Stoffen in Anwesenheit von gasförmigem Chlor auf Temperaturen zwischen 400 und 900 °C erhitzt werden, wobei der Fluoridgehalt der Aufgabemischung zu mehr als 98 % zu gasförmigem Siliciumtetrafluorid umgesetzt wird, und in einer zweiten Verfahrensstufe das gasförmige $SiF_4$ entweder direkt oder nach Umsetzung zu Kieselfluorwasserstoffsäure in Aluminiumfluorid überführt wird, durch Reaktion von $SiF_4$ bzw. $H_2SiF_6$ mit Aluminiumhydroxiden oder Aluminiumoxiden.

2.3 Das Verfahren wird bevorzugt zur Aufarbeitung fluorhaltiger Rückstände verwendet.

EP 0 470 573 A2

Die vorliegende Erfindung betrifft ein Verfahren zur Aufarbeitung fluorhaltiger Rückstände, insbesondere aus dem Bereich der Aluminium-Primärproduktion, unter Rückgewinnung von Aluminium-fluorid.

Fluorhaltige Rückstände fallen in der Aluminum-Primärproduktion überwiegend als verbrauchtes Auskleidungsmaterial der Elektrolysezellen an. Die Wannenauskleidung einer Elektrolysezelle zur Gewinnung von Aluminium umfaßt im wesentlichen die beiden in Fig. 1 skizzierten Bereiche C und F. Der Bereich C besteht aus Kohlenstoff oder Graphit und dient in Form eines dicken, aus Blöcken aufgebauten Bodens als Kathode der Elektrolysezelle. In die untere Hälfte der Kathodenblöcke sind in Nuten Stromzuführungsschienen aus Stahl eingelassen. Unter dem Kathodenboden aus Kohlenstoff befindet sich der Bereich F, die feuerfeste Wärmeisolierung. Hierfür werden verschiedene Feuerfestmaterialien, wie z.B. Schamottesteine, Feuerleichtsteine, Aluminiumoxid, Calciumsilikatplatten u.a.m. eingesetzt. Die Zustellung der oberen Seitenwände der Elektrolysewanne erfolgt überwiegend mit Kohlenstoff- oder Graphitplatten, es werden dafür aber auch Siliciumcarbidplatten oder andere resistente Feuerfestmaterialien in unterschiedlicher Kombination verwendet.

Die Lebens- oder Haltbarkeitsdauer einer solchen Auskleidung beträgt gewöhnlich 4 bis 8 Jahre. Danach muß in der Regel das gesamte verbrauchte Auskleidungsmaterial aus der Elektrolysewanne herausgebrochen und entsorgt werden. Die Elektrolysezelle wird dann komplett mit neuen Kohlenstoff- und Feuerfestwerkstoffen zugestellt.

Während der Betriebsdauer der Aluminium-Elektrolysezelle dringen vor allem Komponenten der Elektrolytschmelze in den Kathodenboden aus Kohlenstoff und auch teilweise in die darunter befindliche Feuerfestisolierung ein. Hauptbestandteile des Schmelzflußelektrolyten sind Kryolith ($Na_3AlF_3$), Natriumfluorid (NaF), Aluminiumfluorid ($AlF_3$) und Calciumfluorid ($CaF_2$). Neben dem Aluminium wird kathodisch auch Natrium abgeschieden, das bevorzugt in den Kohlenstoffboden und die Isoliermaterialien eindiffundiert. Die Natriuminfiltration hat zur Folge, daß der größte Teil der verbrauchten Zellenauskleidung stark alkalisch reagiert. Darüber hinaus bildet das metallische Natrium in Berührung mit Kohlenstoff und Stickstoff Natriumcyanid, das dann im Bodenausbruch in geringer Konzentration anzutreffen ist. Des weiteren werden im ausgebauten Kohlenstoffmaterial, dem Bereich C, Verbindungen des Aluminiums wie Aluminiumcarbid und -nitrid vorgefunden, die sich mit Wasser oder Luftfeuchtigkeit leicht zu Aluminiumhydroxid und Methan bzw. Ammoniak umsetzen. Die Zusammensetzung der verbrauchten Auskleidungsmaterialien weist naturgemäß große Schwankungen auf. Nachstehend werden einige Anhaltswerte für die Zusammensetzung des kohlenstoffreichen Materials aus der Zone C gegeben (Angaben in Gew.-%):

| | |
|---|---|
| C = | 25 - 50 |
| F = | 10 - 18 |
| Al = | 5 - 15 |
| Na = | 10 - 15 |
| Ca = | 1 - 2 |
| Fe = | 0,5 - 1 |
| Si = | 0,2 - 2 |
| CN = | 0,1 - 0,3 |
| AlN = | 0,3 - 3 (Bestimmung schwierig) |
| $Al_4C_3$ = | 0,2 - 2 (Bestimmung schwierig). |

Unmittelbar unter dem Kohlenstoffboden finden sich meist mehr oder weniger dicke Ausscheidungsschichten, die stark kryolithhaltig sind. In der darunter folgenden Feuerfestisolation F nimmt der Fluorgehalt von oben nach unten steil ab. Wurden für die Wärmeisolierung Schamotte- oder Feuerleichtsteine verwendet, ist im Bereich F mit einem $SiO_2$-Gehalt von rund 50 Gew.-% zu rechnen.

Für die Aufarbeitung von verbrauchtem Zellenausbruch unter Rückgewinnung des Fluorinhaltes sind verschiedene Verfahren vorgeschlagen worden. Ein bekanntes Verfahren ist z.B. die Laugung des zerkleinerten Bodenausbruchs mit Natronlauge, wobei das Fluor als NaF in Lösung geht. Nach diesem Verfahren kann im wesentlichen nur das verbrauchte Kohlenstoffmaterial aus dem Bereich C wirtschaftlich aufgearbeitet werden. Der Fluorgehalt wird dabei nur sehr unvollkommen, nämlich nur zu 60 bis 80 %, ausgelaugt. Es verbleibt ein schlammiger, kohlenstoffhaltiger, schwer entsorgbarer Laugungsrückstand. Aus der NaFhaltigen Lösung kann durch Neutralisation mit Flußsäure und Zusatz von $AlF_3$ lediglich Kryolith gewonnen werden. Die Elektrolyseanlagen benötigen aber zur Aufrechterhaltung der üblichen $AlF_3$-reichen Schmelzbadzusammensetzung vorwiegend Alumniumfluorid als zu ergänzendes Salz. Bei Einsatz eines $SiO_2$- und/oder $Al_2O_3$-haltigen Isolationsmaterials aus dem Bereich F werden die Bestandteile als Natriumsilikat bzw. -aluminat aufgelöst. Dabei werden erhebliche Mengen an NaOH nutzlos verbraucht.

Ein weiteres bekanntes Aufarbeitungsverfahren ist die Pyrohydrolyse. Hierbei wird die verbrauchte Auskleidung, und zwar ebenfalls nur der Kohlenstoffteil aus dem Bereich C, bei Temperaturen oberhalb von 1000 °C mit Wasserdampf umgesetzt. $AlF_3$ und NaF reagieren mit Wasserdampf zu HF und den Metalloxiden $Al_2O_3$ und $Na_2O$. Während die Umsetzung zwischen $AlF_3$ und $H_2O$ verhältnismäßig günstig abläuft, gelingt die pyrohydrolytische Reaktion zwischen NaF und $H_2O$ nur bei sehr hohen Temperaturen oberhalb von 1100 °C und einem vielfachen Überschuß an Wasserdampf. Infolgedessen ist die HF-Konzentration im Abgas äußerst niedrig und bedarf einer kostspieligen Aufkonzentration, oder HF muß an einer großen Menge Aluminiumoxid adsorbiert werden. Zudem wird das HF-haltige Abgas verunreinigt durch Siliciumfluorwasserstoffsäure, die aus HF und $SiO_2$ rückgebildet wird. Nachteilig bei diesem Verfahren ist weiterhin, daß Calciumfluorid kaum gespalten wird und daß der Pyrohydrolyserückstand wegen der hohen Betriebstemperatur stark versintert. Rückstände mit höheren $SiO_2$-Gehalten, z. B. aus dem Bereich F, lassen sich nach diesem Verfahren nicht aufarbeiten, da mit zunehmendem $SiO_2$-Gehalt die Sintertemperaturen sinken und dementsprechend der Fluorgehalt im Endrückstand hoch bleibt.

Ein Silico-Pyrohydrolyse-Verfahren zur Aufarbeitung $SiO_2$-reicher Rückstände wird in der AU-A-16787/88, entsprechend EP-A-0 294 300, beschrieben. Dabei werden die verbrauchten Auskleidungsrückstände in Anwesenheit von einem oxidierenden Gas und Wasserdampf, ggf. unter Zugabe von $SiO_2$, auf Temperaturen deutlich oberhalb von 1000 °C aufgeheizt. Die Fluoride werden mit Wasserdampf zu HF umgesetzt, die Metalloxide werden in eine Silikatphase überführt. Bei den notwendigerweise hohen Betriebstemperaturen ist die Silikatphase zumindest teilweise flüssig. In dieser teigigen bzw. schmelzflüssigen Phase werden auch die Fluoride gelöst, so daß die Extraktion von Fluor auch hier nur unvollständig gelingen kann. Der Endrückstand weist daher immer noch vergleichsweise hohe Restfluorgehalte auf, die eine Deponierung zumindest bedenklich erscheinen lassen. Wie bei der Pyrohydrolyse ist ein hoher Wasserdampfüberschuß erforderlich. Das gasförmige Produkt HF fällt dementsprechend in stark verdünnter Form an, so daß vor der Umsetzung zu $AlF_3$ ggf. eine Anreicherung sowie eine Abtrennung des mit überführten Siliciums erfolgen müssen.

Aufgabe der vorliegenden Erfindung ist es, ein Verfahren zu entwickeln, das es erlaubt, bei Temperaturen deutlich unterhalb von 1000 °C mindestens 98 % des Fluorgehaltes aus fluorhaltigen Rückständen, insbesondere der Aluminium-Primärproduktion, zu entfernen. Dabei soll ein unschädlicher Endrückstand mit einem Fluorgehalt von maximal 0,5 Gew.-% erzeugt werden. Gleichzeitig soll eine einfache Rückgewinnung von reinem $AlF_3$, z.B. zur Rückführung in die Aluminium-Schmelzflußelektrolyse, möglich sein.

Diese Aufgabe wird erfindungsgemäß gelöst durch ein Verfahren mit den in Anspruch 1 angegebenen Merkmalen.

Nach dem erfindunggemäßen Verfahren wird eine Aufgabemischung aus feinteiligen Feststoffen erstellt, die sowohl fluor- und kohlenstoffhaltige Rückstände, als auch $SiO_2$ bzw. $SiO_2$-haltige Stoffe umfaßt. Die Aufgabemischung wird in einer ersten Verfahrensstufe in Anwesenheit von gasförmigem Chlor auf Temperaturen zwischen 400 und 900 °C aufgeheizt. Dabei werden die Fluoride umgesetzt zu gasförmigem $SiF_4$ und den entsprechenden Metallchloriden. Kohlenstoff ist dabei notwendig zur Reduktion und kann gleichzeitig als Wärmelieferant durch Verbrennung zu CO bzw. $CO_2$ ausgenutzt werden. In einer zweiten Verfahrensstufe wird das entstehende $SiF_4$ entweder direkt oder nach Umsetzung zu $H_2SiF_6$ in Aluminiumfluorid überführt. Auf diese Weise gelingt es, einen unschädlichen Endrückstand und gleichzeitig ein reines $AlF_3$ zu erzeugen, das z.B. direkt in die Aluminiumschmelzflußelektrolyse zurückgeführt werden kann. Nachfolgend werden die bei dem erfindungsgemäßen Verfahren ablaufenden Reaktionen näher erläutert.

Das in den Rückständen enthaltene Natriumfluorid wird umgesetzt gemäß:

$$4NaF + SiO_2 + xC + 2Cl_2 = 4NaCl + SiF_4 + (2-x)CO_2 + (2x-2)CO \qquad \textbf{(1)}$$

Die Reaktion **(1)** läuft optimal bei Temperaturen zwischen 600 und 800 °C ab.

Die Überführung von $AlF_3$ in $SiF_4$ geschieht besonders leicht, wobei primär eventuell $AlCl_3$ gebildet werden kann:

$$4\ AlF_3 + 3\ SiO_2 + 6\ Cl_2 + 3\ C = 3\ SiF_4 + 4\ AlCl_3 + 3\ CO_2 \qquad \textbf{(2)}$$

Vorteilhafterweise wirkt auch $AlCl_3$ als Chlorierungsmittel und reagiert mit $SiO_2$ und NaF sofort weiter nach dem in (3) dargestellten Reaktionsschema:

$$4\ AlCl_3 + 3\ SiO_2 + 12\ NaF = 3\ SiF_4 + 12\ NaCl + 2\ Al_2O_3 \qquad \textbf{(3)}$$

In der Summe äußern sich die Reaktionen **(2)** und **(3)** in der Weise, daß für die Umwandlung von $AlF_3$ in $SiF_4$ kein Chlor verbraucht wird, so daß im Prinzip eine Umsetzung nach Gleichung **(4)** stattfindet:

$$4\ AlF_3 + 3\ SiO_2 = 3\ SiF_4 + 2\ Al_2O_3 \qquad \textbf{(4)}$$

Bei begrenztem Chlorangebot läßt sich also die $AlCl_3$-Bildung vermeiden. Gleiches gilt auch für die denkbare Carbochlorierung von $Al_2O_3$ nach:

$$2\ Al_2O_3 + 6\ Cl_2 + 3\ C = 4\ AlCl_3 + 3\ CO_2 \qquad \textbf{(5)}$$

Die Carbochlorierung von $Al_2O_3$ zu $AlCl_3$ verstärkt sich mit steigender Temperatur.

Wie bereits eingangs erwähnt, können im verbrauchten Kohlenstoffmaterial aus dem Bereich C auch andere Aluminiumverbindungen, wie z. B. Aluminiumnitrid und -carbid enthalten sein. Diese werden mit Chlor umgesetzt zu $AlCl_3$, welches entsprechend Reaktion (3) wieder verbraucht wird.

Calciumfluorid ist die stabilste Fluorverbindung in den Rückständen. Das erfindungsgemäße Verfahren erlaubt es, auch das Fluor aus dem $CaF_2$ in Anwesenheit von $SiO_2$, $Cl_2$ und C effizient als $SiF_4$ zu extrahieren:

$$2\ CaF_2 + SiO_2 + 2\ Cl_2 + 2\ C = SiF_4 + 2\ CaCl_2 + 2\ CO \qquad \textbf{(6)}$$

Das Abgas aus der ersten Verfahrensstufe, welches das gebildete $SiF_4$ enthält, kann, ggf. nach einer zwischengeschalteten Reinigungsstufe, unmittelbar in eine $Al(OH)_3$-Suspension zur Aluminiumfluoridgewinnung eingeleitet werden:

$$3\ SiF_4 + 4\ Al(OH)_3 + x\ H_2O = 4\ AlF_3 + 3\ SiO_2 \cdot y\ H_2O \qquad \textbf{(7)}$$

Eine weitere Möglichkeit ist es, das $SiF_4$ aus dem Abgasstrom in Wasser zu absorbieren. Dabei zerfällt das $SiF_4$ in Kieselfluorwasserstoffsäure und Kieselgel:

$$3\ SiF_4 + 2\ H_2O = 2\ H_2SiF_6 + SiO_2 \cdot aq \qquad \textbf{(8)}$$

Aus der entstandenen Lösung kann nach bekannten Verfahren , die z.B. von J. Massone (Chemiker-Zeitung, Febr. 1972, 96. Jg., S. 65 - 75) im Überblick beschrieben werden, durch Reaktion mit Aluminiumhydroxid das gewünschte Aluminiumfluorid erhalten werden:

$$H_2SiF_6 + 2\ Al(OH)_3 + aq = AlF_3 + 4\ H_2O + SiO_2 \cdot aq \qquad \textbf{(9)}$$

Das nach **(7)** bzw. **(9)** gebildete wasserlösliche $AlF_3$ wird von dem ausgeschiedenen Kieselgel abgetrennt. Aus der Lösung wird es als $AlF_3 \cdot 3H_2O$ auskristallisiert und dann durch Erhitzen vom Wasser befreit. Es entsteht ein reines Aluminiumfluorid, das in die Aluminiumschmelzflußelektrolyse zurückgeführt werden kann. Das gebildete Kieselgel ist ein Wertstoff, der z. B. als kolloidale bzw. hochdisperse Kieselsäure gehandelt werden kann.

Als Einsatzstoffe für das erfindungsgemäße Verfahren eignen sich insbesondere verbrauchte Zellenauskleidungen der Aluminiumschmelzflußelektrolyse. Im Gegensatz zur Pyrohydrolyse, bei der die Anwesenheit von $SiO_2$ die entscheidenden Reaktionen behindert, ist $SiO_2$ bei dem vorgeschlagenen Verfahren ein notwendiges Reaktionsmittel zur Bildung von $SiF_4$. Das bedeutet, daß nicht nur das fluorimprägnierte Kohlenstoffmaterial aus dem Bereich C, sondern auch das fluorimprägnierte, $SiO_2$-reiche Feuerfestmaterial, wie z.B. Schamottesteine, aus dem Bereich F mit in den Wiederaufarbeitungsprozeß einbezogen werden können. Da auch als $CaF_2$ gebundenes Fluor wirksam extrahiert wird, können sogar flußspathaltige Schlacken bzw. Erze mitverarbeitet und in Aluminiumfluorid überführt werden. Das Verfahren eignet sich

ferner zur Aufbereitung fluoridhaltiger Stäube aus der Abgasreinigung von Aluminiumelektolysezellen, die stark durch Kohlenstoffpartikel und Fremdmetalle verunreinigt sind und daher nur bedingt in die Zellen zurückgeführt werden können. Wird z. B. eine möglichst hohe Reinheit des erzeugten Aluminiums gefordert, müssen derartige Stäube ausgeschleust und auf Sonderdeponien gelagert werden.

Die Aufgabemischung muß so zusammengestellt werden, daß der $SiO_2$-Gehalt mindestens der Menge entspricht, die erforderlich ist, um den gesamten Fluorgehalt stöchiometrisch zu $SiF_4$ umzusetzen. Grundsätzlich kann der $SiO_2$-Überschuß beliebig gewählt werden. Optimale Bedingungen bezüglich der Reaktionskinetik ergeben sich bei einem $SiO_2$-Überschuß im Bereich zwischen der 1,5- und 2-fachen stöchiometrischen Menge. Bei hohem Anteil an verbrauchtem Auskleidungsmaterial aus dem Bereich F in der Aufgabemischung kann sich durchaus ein $SiO_2$-Überschuß von z. B. der 5-fachen stöchiometrischen Menge ergeben. Wegen der niedrigen Reaktionstemperaturen besteht auch bei derartigen $SiO_2$-Gehalten keine Schmelz- oder Versinterungsgefahr des Aufgabegemisches. Die Einstellung des $SiO_2$-Gehaltes in der Aufgabemischung kann erfolgen z. B. durch Zugabe von $SiO_2$ oder einer entsprechenden Menge an Zellenausbruch aus dem Bereich F.

Die zugeführte Menge an gasförmigem Chlor muß mindestens derjenigen Menge entsprechen, die benötigt wird, um die Kationen der in der Aufgabemischung enthaltenen Fluoride stöchiometrisch in die entsprechenden Chloride umzuwandeln. Allerdings können sich Chlorverluste bezüglich der Fluorextraktion ergeben z. B. durch die Anwesenheit von Cyaniden in den verbrauchten Kathodenböden. Diese liegen überwiegend als NaCN, in geringen Mengen auch als $Ca(CN)_2$ vor. Diese Gefahrstoffe werden nach dem vorgeschlagenen Verfahren sehr schnell und effizient zerstört, z. B. gemäß Reaktion (10)

$$2\ NaCN + Cl_2 = 2\ NaCl + 2\ C + N_2 \qquad (10)$$

oder noch leichter unter oxidierenden Bedingungen (z. B. am Auslaufende des Reaktors) nach Raktion (11)

$$2\ NaCN + O_2 + Cl_2 = 2\ NaCl + 2\ CO + N_2 \qquad (11)$$

Ein weiterer Mehrverbrauch an Chlor tritt z. B. dadurch ein, daß als Natriumcarbonat gebundenes Na unter reduzierenden Bedingungen zu NaCl umgesetzt wird. Zum Ausgleich der genannten Chlorverluste hat es sich als günstig erwiesen, die für die Fluorextraktion notwendige stöchiometrische Chlormenge um bis zu 5 % zu überschreiten. Eine weitere Erhöhung des Chloreintrags führt zu keiner wesentlichen Ausbeuteverbesserung bezüglich der Fluorextraktion.

Der Kohlenstoffgehalt in der Aufgabemischung wird vorteilhafterweise so eingestellt, daß die Verbrennung des nicht zur Reduktion verbrauchten Kohlenstoffs ausreicht, um den gesamten Wärmebedarf des Prozesses zu decken.

Der für die Reaktionen einzuhaltende Temperaturbereich liegt zwischen etwa 400 und 900 °C. Unterhalb von 400 °C laufen die Reaktionen allenfalls unvollständig ab. Oberhalb von 900 °C besteht die Gefahr von Sintervorgängen in der Reaktionsmischung, wodurch die Fluorextraktion behindert oder sogar ganz unterbunden wird. Um eine möglichst vollständige Fluorextraktion zu gewährleisten, sollte die Betriebstemperatur so gewählt werden, daß die Reaktionsmischung die erste Stufe des vorgeschlagenen Verfahrens in weitestgehend fester Form durchläuft. Im Bereich zwischen 600 und 800 °C wurde eine optimale Ausbeute an $SiF_4$ experimentell ermittelt.

Vorteilhafterweise werden Gase und Feststoffe im Gegenstrom geführt. Die Reaktionen spielen sich dann im gesamten Temperaturbereich zwischen der Chargiertemperatur am Eintrittsende und der Temperatur des Rückstandes am Auslaufende des Reaktors ab. Am Auslaufende werden Verbrennungsluft und Chlor zugeführt, und die Temperaturen können hier bei 900 °C liegen. Die im Prozeß erzeugten Reaktionsgase verlassen den Reaktor mit 100 bis 300 °C. Ein Vorteil dieser Arbeitsweise ist es, daß das in der heißeren Zone vorübergehend gebildete $AlCl_3$ im Gegenstrom zur festen Reaktionsmischung gemäß Reaktionsgleichung (3) wieder abgebaut wird. Zweckmäßigerweise wird diese Stufe des erfindungsgemäßen Verfahrens in einem Drehrohrofen oder einem Mehretagenofen durchgeführt.

Unter den beschriebenen Verfahrensbedingungen gelingt es, bei Temperaturen deutlich unterhalb von 1000 °C mindestens 98 % des Fluorgehaltes aus den eingesetzten Rückständen zu entfernen. Der unschädliche Endrückstand weist nur noch äußerst geringe Restfluorgehalte unterhalb von 0,3 Gew.-% auf. Experimentell wurden Fluorgehalte von etwa 0,1 Gew.-% erreicht. Wasserlösliche Bestandteile des Endrückstandes, wie z.B. Natrium- und Calcium-chlorid, können, falls erforderlich, ausgelaugt und separat auskristallisiert werden. Danach besteht der Endrückstand im wesentlichen aus Aluminium- und Siliciumoxiden. Geringe Mengen an Begleitoxiden, wie z. B. Eisen- und Titanoxiden, sind ebenfalls vorhanden. Dieser

Rückstand kann unbedenklich deponiert werden. Aus dem in der ersten Verfahrensstufe erzeugten $SiF_4$ wird auf einfache Weise ein reines $AlF_3$ gewonnen, das unmittelbar in die Aluminiumschmelzflußelektrolyse zurückgeführt werden kann. Als weiterer Wertstoff entsteht kolloidale bzw. hochdispersive Kieselsäure.

## Patentansprüche

1. Verfahren zur Aufarbeitung fluorhaltiger Rückstände unter Rückgewinnung von Aluminiumfluorid, dadurch gekennzeichnet, daß in einer ersten Verfahrensstufe feinteilige fluor- und kohlenstoffhaltige Rückstände zusammen mit $SiO_2$ oder $SiO_2$-haltigen Stoffen in Anwesenheit von gasförmigem Chlor auf Temperaturen zwischen 400 und 900 °C erhitzt werden, wobei der Fluoridgehalt der Aufgabemischung zu mehr als 98 % zu gasförmigem Siliciumtetrafluorid umgesetzt wird, und in einer zweiten Verfahrensstufe das gasförmige $SiF_4$ entweder direkt oder nach Umsetzung zu Kieselfluorwasserstoffsäure in Aluminiumfluorid überführt wird, durch Reaktion von $SiF_4$ bzw. $H_2SiF_6$ mit Aluminiumhydroxiden oder Aluminiumoxiden.

2. Verfahren nach Anspruch 1, dadurch gekennzeichnet, daß die Reaktionstemperatur in der ersten Verfahrensstufe zwischen 600 und 800 °C eingestellt wird.

3. Verfahren nach einem der vorhergehenden Ansprüche, dadurch gekennzeichnet, daß in der ersten Verfahrensstufe Feststoffe und Gase im Gegenstrom geführt werden.

4. Verfahren nach einem der vorhergehenden Ansprüche, dadurch gekennzeichnet, daß die erste Verfahrensstufe in einem Drehrohrofen oder einem Etagenofen durchgeführt wird.

5. Verfahren nach einem der vorhergehenden Ansprüche, dadurch gekennzeichnet, daß das gasförmige Chlor in einer Menge zugeführt wird, die dem 1- bis 1,05-fachen Wert der stöchiometrisch erforderlichen Menge zur Abbindung der Kationen der in der Aufgabemischung enthaltenen Fluoride entspricht.

6. Verfahren nach einem der vorhergehenden Ansprüche, dadurch gekennzeichnet, daß die Zugabe an $SiO_2$ oder $SiO_2$-haltigen Stoffen so bemessen wird, daß der Gesamtgehalt an $SiO_2$ in der Aufgabemischung dem 1- bis 5-fachen Wert der stöchiometrisch erforderlichen Menge zur Umsetzung des gesamten Fluorgehaltes zu $SiF_4$ entspricht.

7. Verfahren nach einem der vorhergehenden Ansprüche, dadurch gekennzeichnet, daß als fluor- und kohlenstoffhaltige Rückstände verbrauchtes Auskleidungsmaterial aus Aluminiumelektrolyseöfen, Stäube aus der Abgasreinigung von Al-Elektrolysen, flußspathaltige Schlacken bzw. Erze oder deren Mischungen eingesetzt werden.

8. Verfahren nach einem der vorhergehenden Ansprüche, dadurch gekennzeichnet, daß die Rückstände die 1. Verfahrensstufe in fester Form durchlaufen.

9. Verfahren nach einem der vorhergehenden Ansprüche, dadurch gekennzeichnet, daß das Abgas aus der 1. Verfahrensstufe mit dem erzeugten gasförmigen $SiF_4$ in der 2. Verfahrensstufe in eine wäßrige $Al(OH)_3$-Suspension zur Bildung von $AlF_3$ eingeleitet wird.

10. Verfahren nach einem der vorhergehenden Ansprüche 1 - 8, dadurch gekennzeichnet, daß das gasförmige $SiF_4$ aus dem Abgas der 1. Verfahrensstufe in Wasser absorbiert wird und die entstehende Kieselfluorwasserstoffsäure anschließend mit $Al(OH)_3$ zu $AlF_3$ umgesetzt wird.

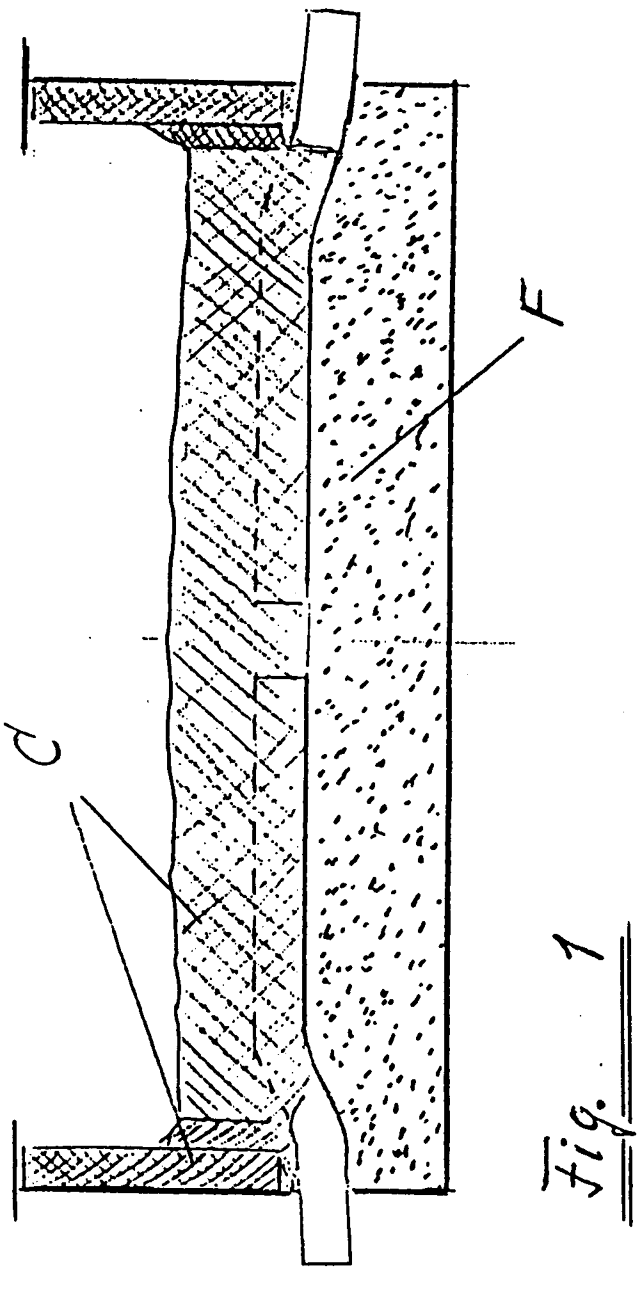


Fig. 1